# EUROPÄISCHE PATENTANMELDUNG

(11) **EP 3 811 778 A1**
(43) Veröffentlichungstag der Anmeldung: **28.04.2021**
(21) Anmeldenummer: 20401052.4
(22) Anmeldetag: 13.10.2020
(51) Int. Cl.: A01M 7/00, A01M 21/02, A01M 21/04, A01B 49/04

(54) **LANDWIRTSCHAFTLICHES BODENBEARBEITUNGSGERÄT**

(30) Priorität: 23.10.2019 DE 102019128586
(71) Anmelder: Amazonen-Werk H. Dreyer SE & Co. KG, 49205 Hasbergen (DE)
(72) Erfinder: Mahler, Tom, 04249 Leipzig (DE)

(57) **Zusammenfassung**

Die Erfindung betrifft ein landwirtschaftliches Bodenbearbeitungsgerät (10), mit mehreren in Querrichtung beabstandet zueinander angeordneten Bodenbearbeitungswerkzeugen (22), welche dazu eingerichtet sind, durch den Boden einer landwirtschaftlichen Nutzfläche bewegt zu werden, und einer Spritzeinrichtung (24) zum Ausbringen von Spritzflüssigkeit auf den Boden der landwirtschaftlichen Nutzfläche und/oder darauf befindlicher Nutz- und/oder Schadpflanzen, wobei die Spritzeinrichtung (24) ein Direkteinspeisesystem (26) zum geräteinternen Herstellen der auszubringenden Spritzflüssigkeit aus einer Trägerflüssigkeit und zumindest einem Pflanzenschutzmittel aufweist.

## Beschreibung

Die Erfindung betrifft ein landwirtschaftliches Bodenbearbeitungsgerät nach dem Oberbegriff des Patentanspruchs 1, einen Maschinenverbund nach dem Oberbegriff des Patentanspruchs 9 und ein Verfahren zum Bearbeiten von Reihenkulturen nach dem Oberbegriff des Patentanspruchs 10.

Zur Beschleunigung der Bearbeitung von landwirtschaftlichen Nutzflächen ist es bekannt, Bodenbearbeitungsgeräte einzusetzen, welche neben einer Mehrzahl von Bodenbearbeitungswerkzeugen auch eine Spritzeinrichtung zum Ausbringen von Spritzflüssigkeit aufweisen. Mittels der Spritzeinrichtung kann Spritzflüssigkeit beispielsweise auf den Boden der landwirtschaftlichen Nutzfläche und/oder auf darauf befindliche Nutz- und/oder Schadpflanzen ausgebracht werden. Bei entsprechenden Bodenbearbeitungsgeräten wird während der Bearbeitung bisher eine vorgemischte Spritzbrühe in einem großvolumigen Vorratstank mitgeführt, wobei der Vorratstank üblicherweise an einem Frontanbau eines Traktors befestigt ist.

Vor dem Bearbeitungsvorgang ist es folglich erforderlich, die auszubringende Spritzbrühe herzustellen. Die Herstellung der Spritzbrühe erfolgt dabei bisher manuell und ist somit aufwendig und führt zu einer erheblichen Verzögerung der Bearbeitung. Außerdem besteht bei der manuellen Herstellung der Spritzbrühe das Risiko, dass die die Spritzbrühe herstellende Person mit Pflanzenschutzmittel in Kontakt kommt. Abhängig von dem auszubringenden Pflanzenschutzmittel kann dies zu Hautreizungen oder anderen gesundheitlichen Beeinträchtigungen führen.

Die Bodenbearbeitungswerkzeuge sowie die Spritzdüsen der Spritzeinrichtung befinden sich bei entsprechenden Bodenbearbeitungsgeräten regelmäßig an einem Heckanbau eines Traktors. Folglich ergeben sich lange Leitungswege für die vorgemischte Spritzbrühe vom Vorratstank am Frontanbau zu den Spritzdüsen am Heckanbau. Nach Beendigung des Spritzvorgangs verbleibt eine vergleichsweise große Menge an Spritzbrühe in den Verbindungsleitungen zwischen dem Vorratstank und den Spritzdüsen. Die in den Verbindungsleitungen zurückbleibende Spritzbrühe ist im Rahmen einer aufwendigen Reinigung aus den Verbindungsleitungen zu entfernen und anschließend zu entsorgen.

Die der Erfindung zugrundeliegende Aufgabe besteht somit darin, die Ausbringung von Spritzflüssigkeit während der Bodenbearbeitung zu vereinfachen, indem die zuvor genannten Nachteile zumindest teilweise überwunden werden.

Die Aufgabe wird gelöst durch ein landwirtschaftliches Bodenbearbeitungsgerät der eingangs genannten Art, wobei die Spritzeinrichtung des erfindungsgemäßen landwirtschaftlichen Bodenbearbeitungsgeräts ein Direkteinspeisesystem zum geräteinternen Herstellen der auszubringenden Spritzflüssigkeit aus einer Trägerflüssigkeit und zumindest einem Pflanzenschutzmittel aufweist.

Die Erfindung macht sich die Erkenntnis zunutze, dass ein manuelles Herstellen einer Spritzbrühe vor dem Bearbeitungsvorgang durch den Einsatz eines Direkteinspeisesystems an dem landwirtschaftlichen Bodenbearbeitungsgerät nicht länger erforderlich ist. Eine Verzögerung des Bearbeitungsvorgangs durch eine im Vorfeld erforderliche Herstellung einer Spritzbrühe wird durch das Direkteinspeisesystem effektiv vermieden. Außerdem besteht kein Risiko, dass eine Person bei der Herstellung der Spritzflüssigkeit mit Pflanzenschutzmittel in Kontakt kommt. Darüber hinaus wird durch das Direkteinspeisesystem eine erhebliche Menge an Pflanzenschutzmittel eingespart. Die Menge an Spritzflüssigkeit, die nach Beendigung des Spritzvorgangs in dem Leitungssystem der Spritzeinrichtung zurückbleibt, ist im Vergleich zu den bekannten Lösungen, bei welchen eine vorgemischte Spritzbrühe mitgeführt und ausgebracht wird, äußerst gering. Außerdem wird der Reinigungsaufwand für das Leitungssystem der erfindungsgemäßen Spritzeinrichtung erheblich reduziert, wobei die Reinigung gleichzeitig beschleunigt wird. Die Verwendung eines Direkteinspeisesystems führt außerdem zu einer Reduzierung etwaiger Bedienfehler durch den Bediener des Bodenbearbeitungsgeräts.

Das erfindungsgemäße Bodenbearbeitungsgerät ist vorzugsweise zur Unkrautbekämpfung von Reihenkulturen einsetzbar. Die Bodenbearbeitungswerkzeuge sind vorzugsweise dazu eingerichtet, für eine mechanische Unkrautbekämpfung in den Zwischenräumen zwischen den Pflanzenreihen eingesetzt zu werden. Außerdem sorgen die Bodenbearbeitungswerkzeuge vorzugsweise für eine Bodenauflockerung und somit für eine bessere Wurzeldurchlüftung. Innerhalb der Pflanzenreihen ist eine mechanische Unkrautbekämpfung nur bedingt möglich, da es zur Beeinträchtigung der Nutzpflanzen kommen kann. Jedoch können spezielle Bodenbearbeitungswerkzeuge auch in Pflanzenreihen eingreifen. Insofern können die Bodenbearbeitungswerkzeuge beispielsweise auch als Fingerhacken ausgebildet sein. Unkräuter innerhalb der Pflanzenreihen werden über die Ausbringung von Pflanzenschutzmitteln bekämpft, sodass sich eine Kombination aus mechanischer und chemischer Unkrautbekämpfung ergibt.

In einer bevorzugten Ausführungsform weist das erfindungsgemäße landwirtschaftliche Bodenbearbeitungsgerät einen Vorratstank für die Trägerflüssigkeit auf. Vorzugsweise weist das Direkteinspeisesystem eine oder mehrere Mischkammern auf, wobei die eine oder die mehreren Mischkammern separat zu dem Vorratstank ausgebildet und/oder beabstandet von dem Vorratstank angeordnet sind. Die Trägerflüssigkeit ist in der einen oder den mehrere Mischkammern mit dem Pflanzenschutzmittel zu der auszubringenden Spritzflüssigkeit vermischbar. Die eine oder die mehreren Mischkammern weisen vorzugsweise einen möglichst geringen Abstand zu den Spritzdüsen des Bodenbearbeitungsgeräts auf, über welche die Spritzflüssigkeit ausgebracht wird. Somit können die Verbindungsleitungen zwischen der einen oder den mehreren Mischkammern und den Spritzdüsen vergleichsweise kurz ausgebildet werden, wodurch nach Beendigung des Bearbeitungsvorgangs lediglich eine geringe Menge von Spritzflüssigkeit in den Verbindungsleitungen zwischen der einen oder den mehreren Mischkammern und den Spritzdüsen zurückbleibt. Die mehreren Mischkammern können auch Leitungsabschnitte eines Leitungssystems der Spritzeinrichtung sein. In diesem Fall erfolgt das Vermischen der Trägerflüssigkeit und des Pflanzenschutzmittels in Leitungsabschnitten des Leitungssystems der Spritzeinrichtung. In den Leitungsabschnitten treffen sich beispielsweise eine die Trägerflüssigkeit führende Leitung und eine ein Pflanzenschutzmittel führende Leitung. Der Vorratstank für die Trägerflüssigkeit ist vorzugsweise mit einer Pumpe zum Fördern der Trägerflüssigkeit zu der einen oder den mehreren Mischkammern verbunden. Da der Vorratstank lediglich mit einer Trägerflüssigkeit, beispielsweise mit Wasser, zu befüllen ist und keine Vormischung der Spritzbrühe erforderlich ist, wird der Befüllvorgang des Vorratstanks erheblich beschleunigt. Während des Befüllvorgangs des Vorratstanks besteht auch kein Risiko, dass die mit der Tankbefüllung befasste Person mit Pflanzenschutzmittel in Kontakt kommt.

In einer weiteren bevorzugten Ausführungsform des erfindungsgemäßen landwirtschaftlichen Bodenbearbeitungsgeräts weist das Direkteinspeisesystem einen oder mehrere Vorratsbehälter für Pflanzenschutzmittel auf. Alternativ oder zusätzlich kann das Direkteinspeisesystem eine oder mehrere Aufnahmevorrichtungen zur Kopplung von Vorratsbehältern für Pflanzenschutzmittel umfassen. Durch den einen oder die mehreren Vorratsbehälter für Pflanzenschutzmittel bzw. die eine oder die mehreren Aufnahmeeinrichtungen zur Kopplung von Vorratsbehältern für Pflanzenschutzmittel können unterschiedliche Pflanzenschutzmittel mitgeführt werden, sodass verschiedene Spritzflüssigkeitsmischungen hergestellt und ausgebracht werden können. Während eines Bearbeitungsvorgangs können beispielsweise Herbizide, Fungizide und/oder Insektizide ausgebracht werden. Bisher konnte lediglich eine vorgemischte Spritzbrühe mitgeführt und ausgebracht werden. Das Mitführen von mehreren vorgemischten Spritzbrühen hat bisher die Verwendung mehrerer separater großvolumiger Vorratstanks erfordert und war aufgrund hoher Herstellungskosten, einem fehlenden Bauraum und der sich ergebenden eingeschränkten Sicht für den Fahrer nicht praxistauglich. Herbizide und Fungizide können durch die Spritzeinrichtung des landwirtschaftlichen Bodenbearbeitungsgeräts beispielsweise als Spotapplikation auf die Nutzpflanze ausgebracht werden. Herbizide können durch die Spritzeinrichtung des landwirtschaftlichen Bodenbearbeitungsgeräts beispielsweise als Unterblattspritzung bei Rüben innerhalb der Reihe durch Band- oder Spotapplikation ausgebracht werden. Der eine oder die mehreren Vorratsbehälter für Pflanzenschutzmittel und/oder die eine oder die mehreren Aufnahmeeinrichtungen zur Kopplung von Vorratsbehältern für Pflanzenschutzmittel sind vorzugsweise mit einer Pumpe zum Fördern des Pflanzenschutzmittels zu der einen oder den mehreren Mischkammern verbunden. Es können mehrere Pflanzenschutzmittel unabhängig voneinander eindosiert werden. Über den einen oder die mehreren Vorratsbehälter für Pflanzenschutzmittel und/oder die eine oder die mehreren Aufnahmeeinrichtungen zur Kopplung von Vorratsbehältern für Pflanzenschutzmittel kann das Pflanzenschutzmittel in konzentrierter Form bereitgestellt werden, wobei das Risiko, dass eine Person mit dem Pflanzenschutzmittel in Kontakt kommt, äußerst gering ist. Die eine oder die mehreren Aufnahmeeinrichtungen zur Kopplung von Vorratsbehältern für Pflanzenschutzmittel können jeweils eine Arretierungs- und Ansaugeinheit umfassen. Beispielsweise wird über die eine oder die mehreren Aufnahmeeinrichtungen zur Kopplung von Vorratsbehältern für Pflanzenschutzmittel ein sogenanntes Closed-Transfer-System (CTS) realisiert. Die Anzahl der Mischkammern und die Anzahl der Vorratsbehälter für Pflanzenschutzmittel bzw. die Anzahl der Aufnahmeeinrichtungen zur Kopplung von Vorratsbehältern für Pflanzenschutzmittel kann identisch oder unterschiedlich sein. Es ist auch denkbar, dass unterschiedliche Pflanzenschutzmittel über die gleiche Mischkammer eingespült werden.

In einer weiteren bevorzugten Ausführungsform weist das landwirtschaftliche Bodenbearbeitungsgerät eine Frontanbauvorrichtung auf, welche dazu eingerichtet ist, an einer Front eines landwirtschaftlichen Fahrzeugs angebaut zu werden, wobei der Fronttank für die Trägerflüssigkeit vorzugsweise ein Bestandteil der Frontanbauvorrichtung ist. Die Frontanbauvorrichtung umfasst vorzugsweise eine Kuppeleinheit, über welche die Frontanbauvorrichtung mit einer Frontkupplungsvorrichtung des landwirtschaftlichen Fahrzeugs verbunden werden kann. Die Frontanbauvorrichtung umfasst vorzugsweise eine Trägerstruktur, beispielsweise einen Trägerrahmen, an welcher der Vorratstank für die Trägerflüssigkeit befestigt ist.

In einer weiteren bevorzugten Ausführungsform weist das erfindungsgemäße landwirtschaftliche Bodenbearbeitungsgerät eine Heckanbauvorrichtung auf, welche dazu eingerichtet ist, an einem Heck eines landwirtschaftlichen Fahrzeugs angebaut zu werden. Die Bodenbearbeitungswerkzeuge sind vorzugsweise Bestandteile der Heckanbauvorrichtung. Alternativ oder zusätzlich umfasst die Heckanbauvorrichtung Spritzdüsen der Spritzeinrichtung, welche mit den Mischkammern der Spritzeinrichtung fluidleitend verbunden sind. Die Spritzdüsen können so ausgerichtet sein, dass die Spritzflüssigkeit nach unten, seitlich und/oder nach oben verspritzt wird. Über die Ausrichtung der Spritzdüsen kann beispielsweise eine Unterblattspritzung umgesetzt werden. Im Nahbereich der Spritzdüsen können Blatthebeeinrichtungen angeordnet sein, welche dazu eingerichtet sind, die Blätter der Nutzpflanzen anzuheben. Vorzugsweise sind die Bodenbearbeitungswerkzeuge und die Spritzdüsen an einem gemeinsamen Rahmen der Heckanbauvorrichtung angeordnet. Über den Rahmen erfolgt eine exakte Reihen- und Höhenführung der Bodenbearbeitungswerkzeuge und der Spritzdüsen, sodass das Pflanzenschutzmittel nahe der Pflanzen ausgebracht werden kann. Durch die tiefe Positionierung und die exakte Führung der Spritzdüsen wird der Abdrift der versprühten Spritzflüssigkeit und die Umweltbelastung reduziert.

Das erfindungsgemäße landwirtschaftliche Bodenbearbeitungsgerät wird ferner dadurch vorteilhaft weitergebildet, dass die Mischkammern, der eine oder die mehreren Vorratsbehälter für Pflanzenschutzmittel und/oder die eine oder die mehreren Aufnahmeeinrichtungen zur Kopplung von Vorratsbehältern für Pflanzenschutzmittel Bestandteile der Heckanbauvorrichtung sind. Die eine oder die mehreren Vorratsbehälter für Pflanzenschutzmittel und/oder die eine oder die mehreren Aufnahmeeinrichtungen zur Kopplung von Vorratsbehältern für Pflanzenschutzmittel sind vorzugsweise derart angeordnet, dass diese für einen Bediener von außen zugänglich sind. Dadurch, dass der eine oder die mehreren Vorratsbehälter für Pflanzenschutzmittel bzw. die eine oder die mehreren Aufnahmeeinrichtungen zur Kopplung von Vorratsbehältern für Pflanzenschutzmittel Bestandteile der Heckanbauvorrichtung sind, kann eine schnelle Umschaltung auf ein anderes Pflanzenschutzmittel oder eine andere Pflanzenschutzmitteldosierung erfolgen, da die Mischkammern und die Spritzdüsen ebenfalls Bestandteile der Heckanbauvorrichtung und somit die Leitungswege vergleichsweise kurz sind.

Es ist darüber hinaus ein erfindungsgemäßes landwirtschaftliches Bodenbearbeitungsgerät vorteilhaft, welches eine Pflanzenerfassungseinrichtung aufweist. Die Pflanzenerfassungseinrichtung ist vorzugsweise dazu eingerichtet, während eines Ausbringvorgangs Pflanzen auf der landwirtschaftlichen Nutzfläche zu erfassen. Die Spritzeinrichtung ist vorzugsweise signalleitend mit der Pflanzenerfassungseinrichtung verbunden und dazu eingerichtet, Spritzflüssigkeit lokal auf die von der Pflanzenerfassungseinrichtung erfassten Pflanzen abzugeben. Durch die lokale Abgabe von Spritzflüssigkeit auf die erfassten Pflanzen kann eine Spotapplikation umgesetzt werden. Die Pflanzenerfassungseinrichtung kann eine oder mehrere Kameras umfassen, wobei die Pflanzenerfassung vorzugsweise über eine Auswertung des von der einen oder den mehreren Kameras bereitgestellten Bildmaterials erfolgt. Durch die Spotapplikation kommt es zu einer weiteren Einsparung von Pflanzenschutzmitteln. Die Spotapplikation erlaubt beispielsweise die gezielte Ausbringung von Herbiziden und/oder Insektiziden auf Rübenpflanzen. Die von der Pflanzenerfassungseinrichtung erfassten Pflanzen können Nutz- und/oder Schadpflanzen sein. Insbesondere ist die Pflanzenerfassungseinrichtung dazu eingerichtet, zwischen erfassten Nutzpflanzen und erfassten Schadpflanzen zu unterscheiden, sodass eine pflanzenspezifische Ausbringung der Spritzflüssigkeit möglich ist.

In einer weiteren bevorzugten Ausführungsform ist das erfindungsgemäße landwirtschaftliche Bodenbearbeitungsgerät als landwirtschaftliches Hackgerät ausgebildet. Insbesondere sind die Bodenbearbeitungswerkzeuge als Hackwerkzeuge ausgebildet. Die Bodenbearbeitungswerkzeuge können beispielsweise Hackmesser, Meiselschare oder Fingerräder sein. Durch das als Hackgerät ausgebildete Bodenbearbeitungsgerät kann über die Hackwerkzeuge eine effektive mechanische Unkrautbekämpfung umgesetzt werden.

Die der Erfindung zugrundeliegende Aufgabe wird ferner durch einen Maschinenverbund der eingangs genannten Art gelöst, wobei das landwirtschaftliche Bodenbearbeitungsgerät des erfindungsgemäßen Maschinenverbunds nach einer der vorstehend beschriebenen Ausführungsformen ausgebildet ist. Hinsichtlich der Vorteile und Modifikationen des erfindungsgemäßen Maschinenverbunds wird zunächst auf die Vorteile und Modifikationen des erfindungsgemäßen landwirtschaftlichen Bodenbearbeitungsgeräts verwiesen.

Das landwirtschaftliche Fahrzeug des Maschinenverbunds kann beispielsweise ein Traktor sein. Das landwirtschaftliche Bodenbearbeitungsgerät des Maschinenverbunds kann als landwirtschaftliches Hackgerät ausgebildet sein, wobei die Bodenbearbeitungswerkzeuge Hackwerkzeuge sein können.

Die der Erfindung zugrundeliegende Aufgabe wird ferner durch ein Verfahren der eingangs genannten Art gelöst, wobei im Rahmen des erfindungsgemäßen Verfahrens ein geräteinternes Herstellen der auszubringenden Spritzflüssigkeit aus einer Trägerflüssigkeit und zumindest einem Pflanzenschutzmittel mittels eines Direkteinspeisesystems der Spritzeinrichtung erfolgt. Das erfindungsgemäße Verfahren wird vorzugsweise mittels eines landwirtschaftlichen Bodenbearbeitungsgeräts nach einer der vorstehend beschriebenen Ausführungsformen ausgeführt. Hinsichtlich der Vorteile und Modifikationen des erfindungsgemäßen Verfahrens wird somit zunächst auf die Vorteile und Modifikationen des erfindungsgemäßen landwirtschaftlichen Bodenbearbeitungsgeräts verwiesen.

Das landwirtschaftliche Bodenbearbeitungsgerät weist vorzugsweise eine Frontanbauvorrichtung und/oder eine Heckanbauvorrichtung auf. Die Frontanbauvorrichtung ist vorzugsweise an der Front des landwirtschaftlichen Fahrzeugs angebaut. Die Heckanbauvorrichtung ist vorzugsweise an dem Heck des landwirtschaftlichen Fahrzeugs angebaut.

Das erfindungsgemäße Verfahren wird ferner dadurch vorteilhaft weitergebildet, dass die Trägerflüssigkeit von einem Vorratstank für die Trägerflüssigkeit zu einer oder mehreren Mischkammern der Spritzeinrichtung gefördert wird. Alternativ oder zusätzlich wird eine oder werden mehrere Pflanzenschutzmittel von einem oder mehreren Vorratsbehältern für Pflanzenschutzmittel zu einer oder mehreren Mischkammern der Spritzeinrichtung gefördert. Insbesondere erfolgt ein Vermischen der Trägerflüssigkeit mit dem einen oder den mehreren Pflanzenschutzmitteln zu der auszubringenden Spritzflüssigkeit in einer oder mehreren Mischkammern der Spritzeinrichtung. Der Vorratstank für die Trägerflüssigkeit ist vorzugsweise ein Bestandteil der Frontanbauvorrichtung. Die Bodenbearbeitungswerkzeuge und/oder mit den Mischkammern fluidleitend verbundene Spritzdüsen der Spritzeinrichtung sind vorzugsweise Bestandteile der Heckanbauvorrichtung. Die Mischkammern und/oder der eine oder die mehreren Vorratsbehälter für Pflanzenschutzmittel sind vorzugsweise Bestandteile der Hackanbauvorrichtung.

In einer bevorzugten Ausführungsform des erfindungsgemäßen Verfahrens erfolgt ein Erfassen von Pflanzen auf der landwirtschaftlichen Nutzfläche während des Ausbringvorgangs durch eine Pflanzenerfassungseinrichtung des Bodenbearbeitungsgeräts. Alternativ oder zusätzlich wird die Spritzflüssigkeit lokal auf die von der Pflanzenerfassungseinrichtung erfassten Pflanzen abgegeben. Vorzugsweise umfasst das Verfahren das Identifizieren von Nutzpflanzen und/oder das Identifizieren von Schadpflanzen und/oder das gezielte Abgeben von Spritzflüssigkeit auf erfasste Nutzpflanzen und/oder Schadpflanzen.

Nachfolgend wird eine bevorzugte Ausführungsform der Erfindung unter Bezugnahme auf die beiliegende Zeichnung näher erläutert und beschrieben. Dabei zeigt:

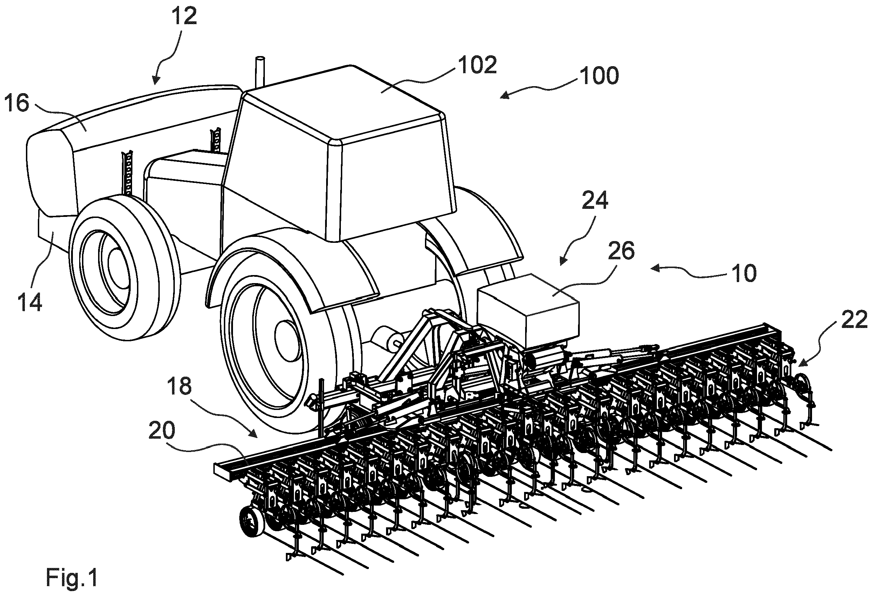

- Fig. 1: ein Ausführungsbeispiel eines erfindungsgemäßen Maschinenverbundes in einer perspektivischen Darstellung.

Die Fig. 1 zeigt einen Maschinenverbund 100 mit einem landwirtschaftlichen Fahrzeug 102 und einem landwirtschaftlichen Bodenbearbeitungsgerät 10.

Das landwirtschaftliche Fahrzeug 102 ist als Traktor ausgebildet und weist eine Frontkuppeleinrichtung und eine Heckkuppeleinrichtung auf. Das landwirtschaftliche Bodenbearbeitungsgerät 10 ist als Hackgerät ausgebildet und weist eine Frontanbauvorrichtung 12 sowie eine Heckanbauvorrichtung 18 auf.

Die Frontanbauvorrichtung 12 ist an der Frontkuppeleinrichtung des Fahrzeugs 102 befestigt. Ferner weist die Frontanbauvorrichtung 12 eine als Trägerrahmen ausgebildete Trägerstruktur 14 auf, auf welcher ein Vorratstank 16 für eine Trägerflüssigkeit angeordnet ist.

Die Heckanbauvorrichtung 18 ist an der Heckkuppeleinrichtung des Fahrzeugs 102 befestigt. Die Heckanbauvorrichtung 18 weist einen Rahmen 20 auf, wobei an dem Rahmen 20 mehrere in Querrichtung beabstandet voneinander angeordnete Bodenbearbeitungswerkzeuge 22 befestigt sind. Die Bodenbearbeitungswerkzeuge 22 sind als Hackwerkzeuge ausgebildet und dazu eingerichtet, durch den Boden einer landwirtschaftlichen Nutzfläche bewegt zu werden. Über die Bodenbearbeitungswerkzeuge 22 kann eine mechanische Unkrautbekämpfung in Zwischenräumen zwischen Pflanzenreihen auf der landwirtschaftlichen Nutzfläche erfolgen. Außerdem sorgen die Bodenbearbeitungswerkzeuge 22 für eine Bodenauflockerung und eine Wurzeldurchlüftung. Die Bodenbearbeitungswerkzeuge 22 können beispielsweise Hackmesser, Meiselschare oder Fingerräder sein.

An dem Rahmen 22 der Heckanbauvorrichtung 18 sind außerdem Spritzdüsen angeordnet, über welche eine Spritzflüssigkeit auf den Boden der landwirtschaftlichen Nutzfläche und/oder darauf befindlicher Nutz- oder Schadpflanzen ausgebracht werden kann.

Der Vorratstank 16 der Frontanbauvorrichtung 12 und die Spritzdüsen der Heckanbauvorrichtung 18 sind Bestandteile einer Spritzeinrichtung 24 des landwirtschaftlichen Bodenbearbeitungsgeräts 10. Die Spritzeinrichtung 24 weist ein Direkteinspeisesystem 26 zum geräteinternen Herstellen der auszubringenden Spritzflüssigkeit aus der Trägerflüssigkeit und einem oder mehreren Pflanzenschutzmitteln auf. Durch das Direkteinspeisesystem 26 kann eine erhebliche Menge an Pflanzenschutzmittel eingespart werden. Ferner wird der Reinigungsaufwand für das Leitungssystem der Spritzeinrichtung 24 durch das geräteinterne Herstellen der auszubringenden Spritzflüssigkeit mittels des Direkteinspeisesystems 26 erheblich reduziert. Die Reinigung der Spritzeinrichtung 24 nimmt somit wesentlich weniger Zeit in Anspruch als die Reinigung von Spritzeinrichtungen von Geräten, welche eine vorgemischte Spritzbrühe mitführen.

Das Direkteinspeisesystem 26 weist mehrere Mischkammern auf, wobei die Mischkammern ebenfalls Bestandteile der Heckanbauvorrichtung 18 sind. In den Mischkammern wird die Trägerflüssigkeit mit einem oder mehreren Pflanzenschutzmitteln zu der auszubringenden Spritzflüssigkeit vermischt. Hierzu ist der Vorratstank 16 in an sich bekannter und daher nicht näher dargestellter Weise mit der Spritzeinrichtung 24 fluidleitend, bspw. mit Hilfe von einer oder mehreren Leitungen, verbunden. Die Mischkammern sind im Nahbereich der Spritzdüsen angeordnet, sodass die Verbindungsleitungen zwischen den Mischkammern und den Spritzdüsen möglichst kurz ausgeführt werden können. Die Mischkammern können beispielsweise Leitungsabschnitte des Leitungssystems der Spritzeinrichtung 24 sein. In diesen Leitungsabschnitten trifft sich beispielsweise eine die Trägerflüssigkeit führende Leitung und eine ein Pflanzenschutzmittel führende Leitung. Das Direkteinspeisesystem 26 kann einen oder mehrere Vorratsbehälter für Pflanzenschutzmittel und/oder eine oder mehrere Aufnahmevorrichtungen zur Kopplung von Vorratsbehältern für Pflanzenschutzmittel umfassen. In den mehreren Vorratsbehältern bzw. über die Aufnahmeeinrichtungen können unterschiedliche Pflanzenschutzmittel mitgeführt werden, sodass verschiedene Spritzflüssigkeitsmischungen hergestellt und ausgebracht werden können.

Der Vorratstank 16 für die Trägerflüssigkeit ist mit einer Pumpe zum Fördern der Trägerflüssigkeit zu den Mischkammern verbunden. Der eine oder die mehreren Vorratsbehälter für das Pflanzenschutzmittel und/oder die eine oder die mehreren Aufnahmevorrichtungen zur Kopplung von Vorratsbehälter für Pflanzenschutzmittel sind ebenfalls mit einer Pumpe zum Fördern des Pflanzenschutzmittels zu den Mischkammern verbunden. In den Mischkammern können auch mehrere Pflanzenschutzmittel unabhängig voneinander eindosiert werden. Über den einen oder die mehreren Vorratsbehälter für Pflanzenschutzmittel und/oder die eine oder die mehreren Aufnahmevorrichtungen zur Kopplung von Vorratsbehältern für Pflanzenschutzmittel kann das Pflanzenschutzmittel in konzentrierter Form bereitgestellt werden, sodass das Risiko, dass eine Person mit dem Pflanzenschutzmittel in Kontakt kommt, äußerst gering ist. Ferner wird in dem Vorratstank 16 lediglich eine Trägerflüssigkeit, beispielsweise Wasser, mitgeführt, sodass keine Vormischung einer Spritzbrühe erforderlich ist. Während des Befüllens der Vorratsbehälters 16 besteht somit auch kein Risiko, dass eine Person mit Pflanzenschutzmittel in Kontakt kommt.

Die eine oder die mehreren Aufnahmeeinrichtung zur Kopplung von Vorratsbehältern für Pflanzenschutzmittel können jeweils eine Arretierungs- und Absaugeinheit umfassen. Vorzugsweise ist die eine oder sind die mehreren Aufnahmeeinrichtungen zur Kopplung von Vorratsbehältern für Pflanzenschutzmittel als Closed-Transfer-System (CTS) realisiert.

Die Spritzdüsen an dem Rahmen 20 der Heckanbauvorrichtung 18 können so ausgerichtet sein, dass die Spritzflüssigkeit nach unten, seitlich und/oder nach oben verspritzt wird. Über die Ausrichtung der Spritzdüsen kann beispielsweise eine Unterblattspritzung umgesetzt werden. Im Nahbereich der Spritzdüsen können außerdem Blatthebeeinrichtungen angeordnet werden, welche dazu eingerichtet sind, die Blätter der Nutzpflanzen anzuheben. Da die Bodenbearbeitungswerkzeuge 22 ebenfalls an dem Rahmen 20 der Heckanbauvorrichtung 18 befestigt sind, kann über den Rahmen 20 eine exakte Reihen- und Höhenführung der Bodenbearbeitungswerkzeuge 22 und der Spritzdüsen umgesetzt werden.

Das Bodenbearbeitungsgerät 10 weist ferner eine nicht dargestellte Pflanzenerfassungseinrichtung auf, mittels welcher während eines Ausbringvorgangs Pflanzen auf der landwirtschaftlichen Nutzfläche erfasst werden können. Die Spritzeinrichtung 24 ist signalleitend mit der Pflanzenerfassungseinrichtung verbunden, sodass Spritzflüssigkeit lokal auf die von der Pflanzenerfassungseinrichtung erfassten Pflanzen abgegeben werden kann. Die Pflanzenerfassungseinrichtung ist ferner dazu eingerichtet, die erfassten Pflanzen als Nutzpflanzen oder Schadpflanzen zu klassifizieren. Somit kann eine gezielte Abgabe von Spritzflüssigkeit auf Nutzpflanzen und/oder Schadpflanzen erfolgen. Beispielsweise können auf diesen Weise Herbizide, Fungizide und/oder Insektizide gezielt lokal ausgebracht werden.

### Bezugszeichenliste

- 10: Bodenbearbeitungsgerät
- 12: Frontanbauvorrichtung
- 14: Trägerstruktur
- 16: Vorratstank
- 18: Heckanbauvorrichtung
- 20: Rahmen
- 22: Bodenbearbeitungswerkzeuge
- 24: Spritzeinrichtung
- 26: Direkteinspeisesystem

- 100: Maschinenverbund
- 102: Fahrzeug

## Patentansprüche

1. Landwirtschaftliches Bodenbearbeitungsgerät (10), mit
- mehreren in Querrichtung beabstandet zueinander angeordneten Bodenbearbeitungswerkzeugen (22), welche dazu eingerichtet sind, durch den Boden einer landwirtschaftlichen Nutzfläche bewegt zu werden; und
- einer Spritzeinrichtung (24) zum Ausbringen von Spritzflüssigkeit auf den Boden der landwirtschaftlichen Nutzfläche und/oder darauf befindlicher Nutz- und/oder Schadpflanzen;
**dadurch gekennzeichnet, dass** die Spritzeinrichtung (24) ein Direkteinspeisesystem (26) zum geräteinternen Herstellen der auszubringenden Spritzflüssigkeit aus einer Trägerflüssigkeit und zumindest einem Pflanzenschutzmittel aufweist.

2. Landwirtschaftliches Bodenbearbeitungsgerät (10) nach Anspruch 1, mit
- einem Vorratstank (16) für die Trägerflüssigkeit;
**dadurch gekennzeichnet, dass** das Direkteinspeisesystem (26) eine oder mehrere Mischkammern aufweist, wobei die eine oder die mehreren Mischkammern separat zu dem Vorratstank (16) ausgebildet und/oder beabstandet von dem Vorratstank (16) angeordnet sind, wobei die Trägerflüssigkeit in der einen oder den mehreren Mischkammern mit dem Pflanzenschutzmittel zu der auszubringenden Spritzflüssigkeit vermischbar ist.

3. Landwirtschaftliches Bodenbearbeitungsgerät (10) nach Anspruch 1 oder 2, **dadurch gekennzeichnet, dass** das Direkteinspeisesystem (26) einen oder mehrere Vorratsbehälter für Pflanzenschutzmittel und/oder eine oder mehrere Aufnahmeeinrichtungen zur Kopplung von Vorratsbehältern für Pflanzenschutzmittel umfasst.

4. Landwirtschaftliches Bodenbearbeitungsgerät (10) nach Anspruch 2 oder 3, **gekennzeichnet durch** eine Frontanbauvorrichtung (12), welche dazu eingerichtet ist, an einer Front eines landwirtschaftlichen Fahrzeugs (102) angebaut zu werden, wobei der Vorratstank für die Trägerflüssigkeit vorzugsweise ein Bestandteil der Frontanbauvorrichtung (12) ist.

5. Landwirtschaftliches Bodenbearbeitungsgerät (10) nach einem der vorstehenden Ansprüche,
**gekennzeichnet durch** eine Heckanbauvorrichtung (18), welche dazu eingerichtet ist, an einem Heck eines landwirtschaftlichen Fahrzeugs (102) angebaut zu werden, wobei die Bodenbearbeitungswerkzeuge (22) und/oder mit Mischkammern fluidleitend verbundene Spritzdüsen der Spritzeinrichtung (24) vorzugsweise Bestandteile der Heckanbauvorrichtung (18) sind.

6. Landwirtschaftliches Bodenbearbeitungsgerät (10) nach Anspruch 5, **dadurch gekennzeichnet, dass** die Mischkammern, der eine oder die mehreren Vorratsbehälter für Pflanzenschutzmittel und/oder die eine oder die mehreren Aufnahmeeinrichtungen zur Kopplung von Vorratsbehältern für Pflanzenschutzmittel Bestandteile der Heckanbauvorrichtung (18) sind.

7. Landwirtschaftliches Bodenbearbeitungsgerät (10) nach einem der vorstehenden Ansprüche,
**gekennzeichnet durch** eine Pflanzenerfassungseinrichtung, welche dazu eingerichtet ist, während eines Ausbringvorgangs Pflanzen auf der landwirtschaftlichen Nutzfläche zu erfassen,
wobei die Spritzeinrichtung (24) signalleitend mit der Pflanzenerfassungseinrichtung verbunden und dazu eingerichtet ist, Spritzflüssigkeit lokal auf die von der Pflanzenerfassungseinrichtung erfassten Pflanzen abzugeben.

8. Landwirtschaftliches Bodenbearbeitungsgerät (10) nach einem der vorstehenden Ansprüche,
**dadurch gekennzeichnet, dass** das landwirtschaftliche Bodenbearbeitungsgerät (10) als landwirtschaftliches Hackgerät ausgebildet ist und/oder die Bodenbearbeitungswerkzeuge (22) als Hackwerkzeuge ausgebildet sind.

9. Maschinenverbund (100), mit
- einem landwirtschaftlichen Fahrzeug (102), und
- einem landwirtschaftlichen Bodenbearbeitungsgerät (10), welches an dem landwirtschaftlichen Fahrzeug (102) befestigt ist;
**dadurch gekennzeichnet, dass** das landwirtschaftliche Bodenbearbeitungsgerät (10) nach einem der vorstehenden Ansprüche ausgebildet ist.

10. Verfahren zum Bearbeiten von Reihenkulturen mittels eines landwirtschaftlichen Bodenbearbeitungsgeräts (10), insbesondere mittels eines landwirtschaftlichen Bodenbearbeitungsgeräts (10) nach einem der Ansprüche 1 bis 8, mit den Schritten:
- Bewegen von mehreren in Querrichtung beabstandet zueinander angeordneten Bodenbearbeitungswerkzeugen (22) des landwirtschaftlichen Bodenbearbeitungsgeräts (10) durch den Boden einer landwirtschaftlichen Nutzfläche; und
- Ausbringen von Spritzflüssigkeit auf den Boden der landwirtschaftlichen Nutzfläche und/oder darauf befindlicher Nutz-und/oder Schadpflanzen mittels einer Spritzeinrichtung (24) des landwirtschaftlichen Bodenbearbeitungsgeräts (10);
**gekennzeichnet durch** den Schritt:
- geräteinternes Herstellen der auszubringenden Spritzflüssigkeit aus einer Trägerflüssigkeit und zumindest einem Pflanzenschutzmittel mittels eines Direkteinspeisesystems (26) der Spritzeinrichtung (24).

11. Verfahren nach Anspruch 10,
**gekennzeichnet durch** zumindest einen der folgenden Schritte:
- Fördern der Trägerflüssigkeit von einem Vorratstank (16) für die Trägerflüssigkeit zu einer oder mehreren Mischkammern der Spritzeinrichtung (24);
- Fördern eines oder mehrerer Pflanzenschutzmittel von einem oder mehreren Vorratsbehältern für Pflanzenschutzmittel zu einer oder mehreren Mischkammern der Spritzeinrichtung (24);
- Vermischen der Trägerflüssigkeit in einer oder mehreren Mischkammern der Spritzeinrichtung (24) mit dem einen oder den mehreren Pflanzenschutzmitteln zu der auszubringenden Spritzflüssigkeit.

12. Verfahren nach Anspruch 10 oder 11,
**gekennzeichnet durch** zumindest einen der folgenden Schritte:
- Erfassen von Pflanzen auf der landwirtschaftlichen Nutzfläche während eines Ausbringvorgangs durch eine Pflanzenerfassungseinrichtung des Bodenbearbeitungsgeräts (10);
- lokales Abgeben der Spritzflüssigkeit auf die von der Pflanzenerfassungseinrichtung erfassten Pflanzen.
